(19) Europäisches Patentamt
European Patent Office
Office européen des brevets

(11) Veröffentlichungsnummer: **0 092 698**
**B1**

(12) # EUROPÄISCHE PATENTSCHRIFT

(45) Veröffentlichungstag der Patentschrift: **26.06.85**

(51) Int. Cl.⁴: **C 09 B 23/14**, C 09 B 23/06, C 09 B 23/10, D 06 P 1/42

(21) Anmeldenummer: **83103323.8**

(22) Anmeldetag: **06.04.83**

(54) **Verfahren zur Herstellung von kationischen Methinfarbstoffen.**

(30) Priorität: **16.04.82 DE 3213966**

(43) Veröffentlichungstag der Anmeldung: **02.11.83 Patentblatt 83/44**

(45) Bekanntmachung des Hinweises auf die Patenterteilung: **26.06.85 Patentblatt 85/26**

(84) Benannte Vertragsstaaten: **BE CH DE FR GB IT LI**

(56) Entgegenhaltungen:
**BE-A- 837 655**
**US-A- 3 514 453**
**US-A- 3 980 430**
**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Raue, Roderich, Dr.**
**Berta-von-Suttner-Strasse 48**
**D-5090 Leverkusen (DE)**
Erfinder: **Kühlthau, Hans-Peter, Dr.**
**Paul-Klee-Strasse 48**
**D-5090 Leverkusen (DE)**

**EP 0 092 698 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein Verfahren zur Herstellung kationischer Methinfarbstoffe der allgemeinen Formel

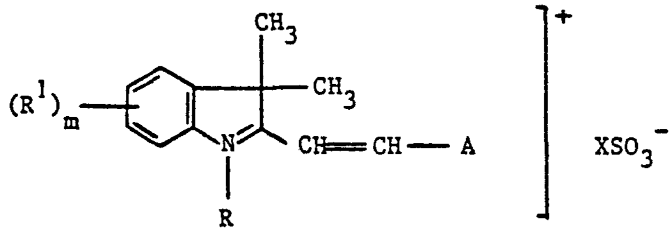

(I)

in welcher

R für einen gegebenenfalls durch Hydroxy, Alkoxy mit 1 bis 4 C-Atomen, Acyloxy, Halogen, Cyan, Carboxy, $C_1$- bis $C_4$-Carbalkoxy, Carbonamido oder Acetyl substituierten Alkylrest mit 1 bis 4 C-atomen,

$R^1$ für Wasserstoff, Alkyl mit 1 bis 4 C-Atomen, Halogen, Alkoxy mit 1 bis 4 C-Atomen, Hydroxyalkoxy mit 2 bis 4 C-Atomen, einen gegebenenfalls durch Halogen, $C_1$ bis $C_4$-Alkyl oder $C_1$ bis $C_4$-Alkoxy substituierten Phenoxy-, Benzyloxy- oder Benzyl-Rest, Carboxyl, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$ bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

A für einen Rest der Formel

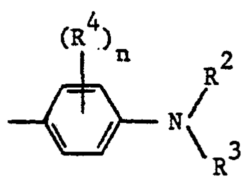

(II)

in welcher die Reste

$R^2$ und $R^3$ unabhängig voneinander für einen gegebenenfalls durch Hydroxy, $C_1$- bis $C_4$-Alkoxy, Halogen, Cyan, Phenyl, Carbalkoxy mit 1 bis 4 C-Atomen, Carbonamido, Acyloxy, Benzyloxy, Sulfonamido oder Acylamino substituierten Alkylrest mit 1 bis 4 C-Atomen stehen,

$R^2$ zusätzlich für einen gegebenenfalls durch Halogen, $C_1$- bis $C_4$-Alkyl oder $C_1$- bis $C_4$-Alkoxy substituierten Phenyl- oder Benzylrest steht, oder mit dem benachbarten C-Atom des Benzolringes einen teilhydrierten N- und gegebenenfalls O-haltigen 5- oder 6-Ring bilden kann,

$R^4$ Wasserstoff, einen Alkylrest mit 1 bis 4 C-Atomen, einen Alkoxyrest mit 1 bis 4 C-Atomen oder Halogen bedeutet,

oder für einen Rest der Formel

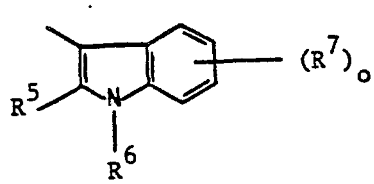

(III)

in welcher

$R^5$ für einen Alkylrest mit 1 bis 4 C-Atomen, einen gegebenenfalls durch Halogen, $C_1$- bis $C_4$-Alkyl, oder $C_1$-bis $C_4$-Alkoxy substituierten Phenylrest oder einen Carbalkoxyrest mit 1 bis 4 C-Atomen,

$R^6$ für Wasserstoff, einen gegebenenfalls durch Hydroxy, Halogen, Alkoxy mit 1 bis 4 C-Atomen, Cyan oder Acyloxy substituierten Alkylrest mit 1 bis 4 C-Atomen,

$R^7$ für Wasserstoff, Halogen, $C_1$-bis $C_4$-Alkyl, $C_1$- bis $C_4$-Alkoxy, Carbalkoxy mit 1 bis 4 C-Atomen, $C_1$- bis $C_4$-Alkylsulfonyl, Phenylsulfonyl, Acetyl oder Benzoyl stehen,

oder für einen Rest der Formel

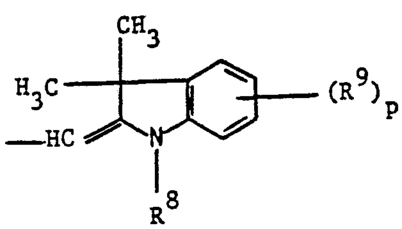

(IV)

stehen, in welcher

$R^8$ bzw. $R^9$ unabhängig voneinander die gleiche Bedeutung wie R bzw. $R^1$ in Formel (I) haben, in welcher

X Aryl, Alkyl mit 1-4 C-Atomen oder Alkoxy mit 1-4 C-Atomen und

m, n, o und p unabhängig voneinander 1 bis 4 bedeuten,

durch Kondensation einer Methylen-Verbindung der Formel

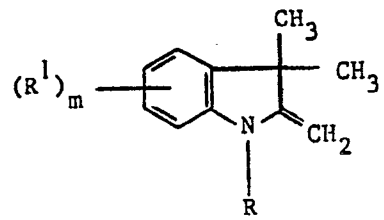

(V)

oder eines Salzes der Formel

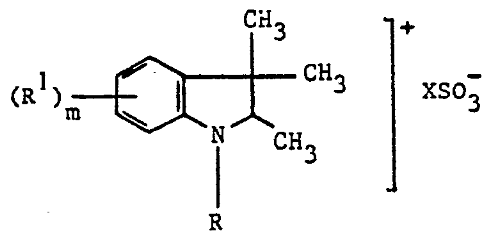

(VI)

in welchen R, $R^1$, X und m die gleiche Bedeutung wie in Formel (I) haben, mit einer Verbindung der Formel

$$A\text{—}CHO \quad (VII)$$

in welcher A die in Formel (I) angegebene Bedeutung besitzt, und Säuren, dadurch gekennzeichnet, daß man die Kondensation der Verbindung (V) mit 1-7 Mol einer Säure der Formel

$$XSO_3H \quad (VIII)$$

und der Verbindung (VI) mit 0-6 Mol einer Säure (VIII) in Gegenwart von 0-30 Gew.-% eines organischen Lösungsmittels und von 0-15 Gew.-% Wasser (beide Gewichtsangaben bezogen auf das Gesamtgewicht der Komponenten (V) bzw. (VI) und (VII) durchführt.

In einer bevorzugten Ausführungsform wird kein organisches Lösungsmittel zugesetzt. Der bevorzugte Wassergehalt liegt bei 0-10 %, insbesondere 0-3 %.

Als Säuren sind besonders diejenigen der Formel (VIII) zu nennen, in der X für einen gegebenenfalls durch 1 bis 3 Alkylreste mit 1 bis 4 C-Atomen, Alkoxyreste mit 1 bis 4 C-Atomen, Halogen oder Hydroxyl substituierten Phenylrest oder die Methylgruppe steht.

Eine bevorzugte Gruppe von Farbstoffen, die nach dem neuen Verfahren darstellbar ist, entspricht der allgemeinen Formel

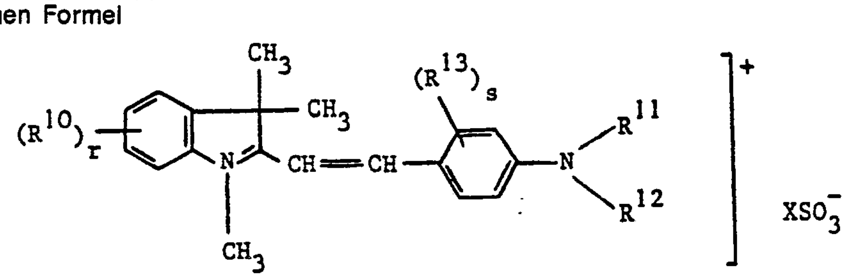

(IX)

in welcher

$R^{10}$ für Wasserstoff, Chlor, Methyl, Methoxy, Ethoxy oder Carbomethoxy,

$R^{11}$ und $R^{12}$ unabhängig voneinander für einen gegebenenfalls durch Hydroxy, Methoxy, Ethoxy, Chlor, Cyan, Phenyl oder Acyloxy substituierten Alkylrest mit 1 bis 4 C-Atomen stehen und

$R^{11}$ zusätzlich einen gegebenenfalls durch Chlor, Methyl, Methoxy oder Ethoxy substituierten Phenylrest bezeichnet oder mit dem benachbarten C-Atom des Benzolringes einen teilhydrierten N- und gegebenenfalls O-haltigen 5-oder 6-Ring bilden kann,

$R^{13}$ Wasserstoff, Methyl, Chlor, Methoxy oder Ethoxy und

r und s 0, 1 oder 2 bedeuten, und

X die gleiche Bedeutung wie in Formel (I) hat.

Insbesondere werden äquimolare Mengen der Verbindungen (V) bzw. (VI) und (VII) umgesetzt.

In den vorstehenden Formeln steht Halogen vorzugsweise für Fluor, Chlor oder Brom.

Unter Acyl wird insbesondere Acetyl, Propionyl, Benzoyl oder Carbamoyl verstanden.

Die Reste $R^2$ und $R^{11}$ können wenn sie mit dem zur o-Stellung des Stickstoffatoms stehenden Kohlenstoffatom des Benzolringes ringeschlossen sind, zusammen mit dem Benzolring und dem Stickstoffatom z. B. einen gegebenenfalls durch $C_1$-$C_4$-Alkyl substituierten Indolin-, Tetrahydrochinolin-, Phenomorpholin- oder Tetrahydrochinoxalin-Ring bilden.

Die Reaktion wird in einem Festphasenreaktor mit rotierenden Einbauten durchgeführt.

Besonders geeignet sind Reaktionsschnecken, Knetapparaturen, Schaufeltrockner oder ein Allphasen-Reaktor, der z. B. in « Chemische Rundschau » 26 (1973), Seite 7 beschrieben wird.

Der Vorteil des neuen Verfahrens besteht darin, daß man, ohne eine wäßrige Phase zu durchlaufen, aus der der Farbstoff durch Aussalzen, Abfiltrieren und Trocknen isoliert werden muß, unmittelbar zum verkaufsfertigen Farbstoff gelangt. Bei dem neuen Verfahren fällt daher kein Abwasser an, und as arbeits- und energieaufwendige Trocknen des aus der Lösung isolierten Farbstoffes entfällt.

Die Herstellung von kationischen Methinfarbstoffen aus 2-Methylen-indolinen in Gegenwart von Säuren, die verschieden sind von den Säuren (VIII), und von großen Mengen an organischen Lösungsmitteln ist bekannt. Die Farbstoffe müssen wie vorstehend beschrieben aus dem Reaktionsmedium isoliert werden. Beispielsweise ist die Herstellung von N-Aralkyl-indoleninium-Farbstoffen in Gegenwart von Phosphorsäure und Alkoholen aus der US-A-3 514 453 bekannt.

Verwendet man als Reaktionsgefäß einen Schaufeltrockner, so kann man unmittelbar zu verkaufsfertigen Farbstoffeinstellungen gelangen, indem man das üblicherweise zugesezte Stellmittel, wie Natriumsulfat, Kochsalz oder Dextrin vor, während oder nach der Reaktion zusetzt. Der Zusatz anorganischer Salze, insbesondere Natriumsulfat, bereits zu Beginn der Reaktion ist von Vorteil, da hierdurch Krustenbildung an der Reaktorwand verhindert wird. Eine weitere bevorzugte Verfahrensweise besteht darin, daß man der ohne Zusatz anorganischer Salze hergestellten Farbstoffschmelze soviel Wasser oder mit Wasser mischbares organisches Lösungsmittel zusetzt, daß man unmittelbar zu einer stabilen konzentrierten Flüssigeinstellung des Farbstoffes gelangt mit einem Farbstoffgehalt von 10-50 %.

Ein überraschender Vorteil besteht auch darin, daß die Reaktion unter den erfindungsgemäßen Bedingungen nahezu quantitativ verläuft, so daß die Farbstoffe ohne weiteres Reinigungsverfahren in überraschend hoher Reinheit erhalten werden.

Eine weitere bevorzugte Verfahrensvariante besteht darin, daß man die Herstellung der Verbindungen (VI) mit in die Reaktion einbezieht. Hierzu setzt man Verbindungen der allgemeinen Formel

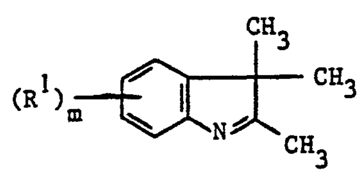

(X)

in welcher $R^1$ und m die gleiche Bedeutung wie in Formel I besitzen,

in Gegenwart der vorstehend genannten Mengen an organischen Lösungsmittel und Wasser mit Verbindungen der Formel

$$X—SO_3R \qquad (XI)$$

worin X und R die in Formel (I) genannte Bedeutung haben, zu Verbindungen der Formel (VI) um und kondensiert diese ohne Zwischenisolierung mit Verbindungen der Formel (VII) zu den Farbstoffen der allgemeinen Formel (I).

Nach einer besonders bevorzugten Verfahrensweise gelangt man durch Umsetzung von Verbindungen der Formel (VII), (X) und (XI) in einer Reaktionsapparatur, die in der Lage ist, zähflüssige und später kristallisierende Farbstoffschmelzen gleichmäßig zu vermischen, unmittelbar zu den Verbindungen der Formel I.

Für das Verfahren geeignete Zwischenprodukte der Formeln (V), (VII) und (X) finden sich in vielen Patentschriften, u. a. seien genannt :

DE-PS 614 325, 615 130, 711 665, 721 020, 730 336, 742 039, 744 019, 891 120, 1 070 316, 1 099 670,

DE-AS 1 044 022, 1 049 994, 1 158 646, 1 569 734, 2 031 202, 2 040 872, 2 234 468,

DE-OS 1 929 417, 2 040 652, 2 040 653, 2 064 881, 2 064 882, 2 101 223, 2 130 790, 2 135 834, 2 200 027, 2 202 300, 2 243 627, 2 726 437,

US-PS 2 815 338, 3 394 130, 3 865 837, 3 888 850,

JA-PS 3 217-69, 13 748-66, 19 951-65, 49 14 525, 49 72 477, 49 74 217, 50 05 683, 73 12 460, 73 13 752, 74 04 531, 76 35 405,

FR-PS 1 261 976,

BE-PS 734 765.

Geeignete Säuren der Formel (VIII) sind beispielsweise : Benzolsulfonsäure, 2-Methyl-

benzolsulfonsäure, 4-Methyl-benzolsulfonsäure, 2,4-Dimethyl-benzolsulfonsäure, 2-Chlor-benzolsulfonsäure, 4-Chlor-benzolsulfonsäure, 2,4-Dichlor-benzolsulfonsäure, 4-Hydroxybenzolsulfonsäure, 4-Methoxy-benzolsulfonsäure, Naphthalin-1-sulfonsäure, Naphthalin-2-sulfonsäure, Methansulfonsäure, Ethansulfonsäure, Butansulfonsäure.

Die Umsetzung kann auch in Gegenwart eines Lösungsmitels vorgenommen werden, das während der Reaktion oder nach beendeter Umsetzung aus der Reaktionsapparatur wieder abdestilliert wird.

Als Lösungsmittel kommen infrage :

Toluol, Xylol, Chlorbenzol, o-Dichlor-benzol und Aceton.

Lösungsmitel, die geeignet sind, die Farbstoffschmelzen nach beendeter Kondensation in stabile, hochkonzentrierte Lösungen zu überführen, sind z. B. :

Ethylenglykol, Propylenglykol, Methylglykol, Ethylglykol, Butylglykol, Methylglykolacetat, Ethylglykolacetat, Butylglykolacetat, Ethylenglykoldiacetat, Glycerinmonoacetat, Glycerintriacetat, Ethylenglykoldimethylether, Ethylenglykoldiethylether, Diethylenglykoldimethylether, Diethylenglykoldiethyleter sowie niedere aliphatische Monocarbonsäure, wie Essigsäure, Milchsäure und Glykolsäure.

Vorzugsweise werden diese Lösungsmittel in Mischung mit Wasser verwendet.

Geeignete Verbindungen der allgemeinen Formel (XI) sind beispielsweise :

Benzolsulfonsäuremethylester, Benzolsulfonsäureethylester, Benzolsulfonsäurebutylester, 2-Methyl-benzolsulfonsäuremethylester, 4-Methyl-benzolsulfonsäuremethylester, 4-Methyl-benzolsulfonsäureethylester, 4-Chlor-benzolsulfonsäuremethylester, Methansulfonsäuremethylester, Methansulfonsäureethylester, Dimethylsulfat, Diethylsulfat, Dibutylsulfat.

Die Reaktion wird bei Temperaturen zwischen 40 und 120 °C durchgeführt, bevorzugt ist der Temperaturbereich von 60-110 °C.

Die erfindungsgemäß hergestellten Farbstoffsalze sind geeignet zum Färben von tannierter Baumwolle, sauer modifizierten Polyamid- und Polyesterfasern, insbesondere aber zum Färben von Fasermaterialien aus Polyacrylnitril, weiter sind sie geeignet zum Färben von holzschliffhaltigem Papier, von Leder sowie zur Herstellung von Kugelschreiberpasten, Tinten und Stempelfarben.

## Beispiel 1

In einem Laboratoriumschaufeltrockner, der mit Schlagstangen ausgerüstet ist, werden 1 730 g 1,3,3-Trimethyl-2-methylen-indolin und 1 770 g 4-Diethylaminobenzaldehyd bei 60 °C vermischt. Dann werden 1 720 g 4-Methyl-benzolsulfonsäure zugesetzt, wobei die Temperatur bis auf 74 °C ansteigt. Man erwärmt nun auf 100 °C und hält das Reaktionsgemisch 6 h bei dieser Temperatur. Anschließend läßt man den Schaufeltrockner über Nacht ohne Wärmezufuhr laufen, wobei der Farbstoff kristallisiert und zu einem feinen Pulver vermahlen wird. Man erhält 4 500 g des Farbstoffes der Formel

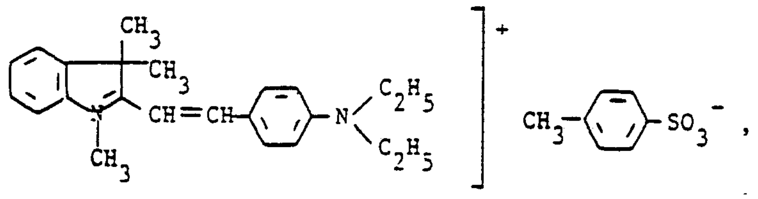

der Polyacrylnitrilfasern rotviolett anfärbt (C. I. Hue Indication Chart Nr. 10).

## Beispiel 2

In einem Laboratoriumschaufeltrockner werden 1 730 g 1,3,3-Trimethyl-2-methylen-indolin und 1 880 g 4-(N-Methyl-N,β-cyanethyl-amino)-benzaldehyd bei 55 °C verrührt und anschließend 1 720 g 4-Methyl-benzolsulfonsäure zugesetzt. Die Temperatur steigt hierbei auf 72 °C.

Man erwärmt das Reaktionsgemisch auf 100 °C und läßt dann den Schaufeltrockner 24 h bei 100 °C und anschließend weitere 12 h ohne Wärmezufuhr laufen. Man erhält 4 850 g des Farbstoffes der Formel

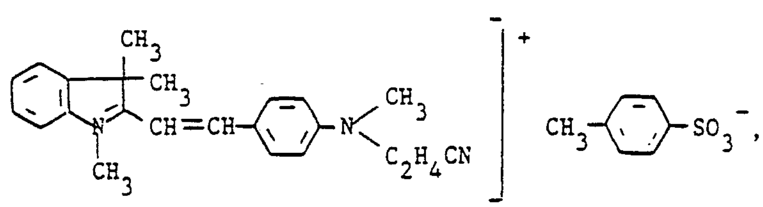

der Polyacrylnitril in einem klaren gelbstichigen Rot anfärbt (C. I. Hue Indication Chart Nr. 49).

Beispiel 3

1 730 g 1,3,3-Trimethyl-2-methylen-indolin und 1 490 g 4-Dimethylamino-benzaldehyd werden in einem Laboratoriumschaufeltrockner bei 50 °C vermischt und 1 720 g 4-Methylbenzolsulfonsäure zugesetzt. Die Temperatur steigt hierbei bis auf 66 °C. Man erwärmt das Reaktionsgemisch nun auf 100 °C und läßt den Schaufeltrockner 24 h bei 100 °C und anschließend 12 h ohne Wärmezufuhr laufen. Man erhält 4 450 g des Farbstoffes der Formel

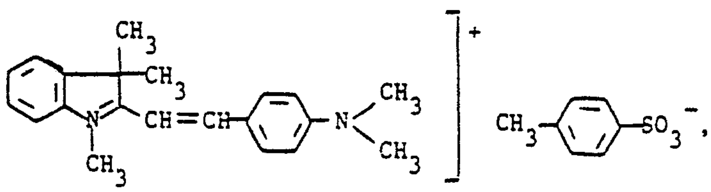

der Polyacrylnitrilfasern blaustichig rot anfärbt (C. I. Hue Indication Chart Nr. 9).

Beispiel 4

In einem Laborschaufeltrockner mischt man bei 70 °C 245 g 4-(N-Methyl-N-(p-ethoxyphenyl)-amino)-benzaldehyd mit 173 g 1,3,3-Trimethyl-2-methylen-indolin und rührt dann 162 g geschmolzene Benzolsulfonsäure ein. Die Schmelze erhitzt sich dabei auf 103 °C. Sie kristallisiert nach 30 min Nachrühren bei 95-100 °C und wird dann noch 3 h bei 95 °C vermahlen. Der erhaltene pulvrige Farbstoff entspricht der Formel

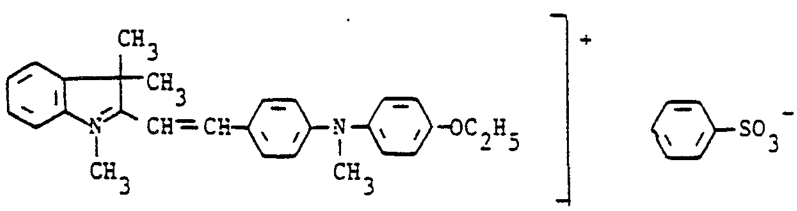

Er färbt Polyacrylnitril rotviolett (C. I. Hue Indication Chart Nr. 11).

Beispiel 5

231 g 1,3,3-Trimethyl-2-methylen-indolin-5-carbonsäuremethylester und 149 g p-Dimethylamino-benzaldehyd werden bei 50 °C in einem Laborschaufeltrockner vermischt. Dann tropft man 110 g Methansulfonsäure ein. Dabei steigt die Temperatur der Schmelze auf 99 °C. Nach wenigen Minuten erstarrt sie kristallin. Der Farbstoff wird noch 3 h bei 95 °C vermahlen. Er entspricht der Formel

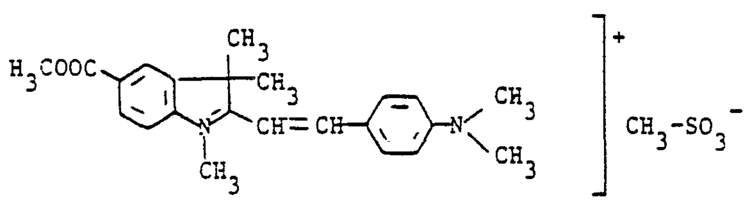

und färbt Polyacrylnitril violett (C. I. Hue Indication Chart Nr. 11).

Beispiel 6

Man verfährt nach den Angaben des Beispiels 5, setzt jedoch statt Methansulfonsäure 170 g geschmolzene Benzolsulfonsäure ein. Nach Zugabe der Benzolsulfonsäure steigt die Temperatur des Gemisches binnen 2 min auf 120 °C, wobei der Farbstoff kristallisiert. Er wird 2 h bei 95 °C vermahlen und ist dann frei von Ausgangsprodukt. Der Farbstoff entspricht der Formel

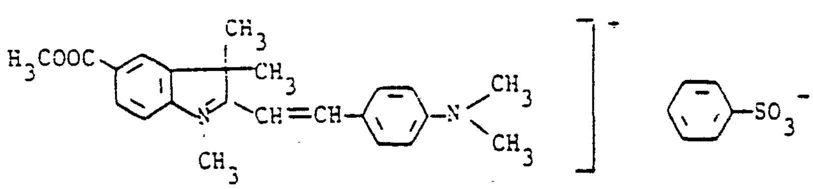

und färbt sauer modifizierte Polyesterfasern violett (C. I. Hue Ind. Chart Nr. 11).

## Beispiel 7

451 g 4-(N-Ethyl-N,β-chlorethyl-amino)-2-methyl-benzaldehyd werden mit 346 g 1,3,3-Trimethyl-2-methylen-indolin bei 40 °C in einem Laborschaufeltrockner gemischt und mit 320 g geschmolzener Benzolsulfonsäure versetzt. Dabei steigt die Temperatur der Schmelze auf 102 °C an. Sie kristallisiert nach 15 min Nachrühren bei 95-100 °C und wird dann noch 2 h bei dieser Temperatur vermahlen. Der erhaltene Farbstoff entspricht der Formel :

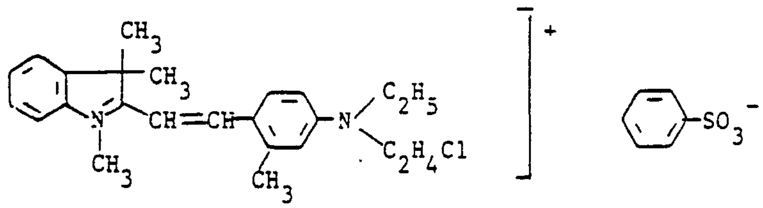

Er färbt Polyacrylnitril blaustichig rot (C.I. Hue Indication Chart Nr. 11).

## Beispiel 8

In einem Schaufeltrockner mischt man 395 g 4-(N-methyl-N,β-chlorethyl-amino)-benzaldehyd bei 50 °C mit 346 g 1,3,3-Trimethyl-2-methylen-indolin und rührt dann 316 g geschmolzene Benzolsulfonsäure ein. Die Temperatur der Schmelze steigt sofort auf 106 °C an. Sie wird 3 h bei 95-100 °C verrührt und kristallisiert dann. Man vermahlt den Farbstoff noch 6 h bei 95 °C. Er hat die Formel

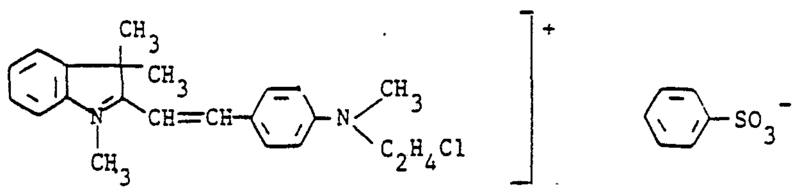

und färbt Polyacrylnitril blaustichig rot (C.I. Hue Indication Chart Nr. 50).

## Beispiel 9

In einem Laborschaufeltrockner mischt man 451 g 1,3,3-Trimethyl-2-methylen-indolin-ω-aldehyd und 346 g 1,3,3-Trimethyl-2-methylen-indolin bei 45 °C und gibt dann 340 g geschmolzene Benzolsulfonsäure zu. Die Temperatur der Schmelze steigt dabei auf 95 °C. Sie wird bei 1 h bei 95-100 °C verrührt und kristallisiert dann. Anschließend mahlt man den Farbstoff noch 6 h bei dieser Temperatur zu einem feinen Pulver. Er entspricht der Formel

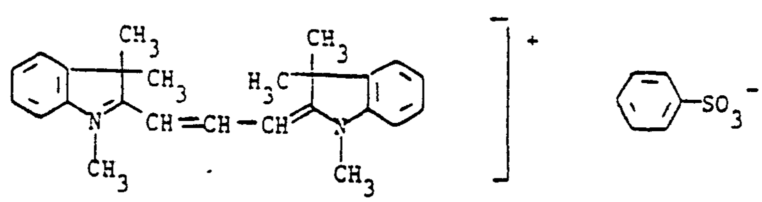

und färbt Papier blaustichig rot (C.I. Hue Indication Chart Nr. 51).

## Beispiel 10

376 g 4-(N-Methyl-N,β-cyanethyl-amino)-benzaldehyd und 346 g 1,3,3-Trimethyl-2-methylen-indolin werden bei 50 °C in einem Laborschaufeltrockner vermischt. Dann läßt man 316 g geschmolzene Benzolsulfonsäure zulaufen, wobei die Temperatur des Gemisches auf 106 °C ansteigt. Nach 4 h Nachrühren bei 95 °C kristallisiert die Schmelze. Sie wird noch 1 h bei 95 °C zu einem feinen Pulver vermahlen. Der erhaltene Farbstoff entspricht der Formel :

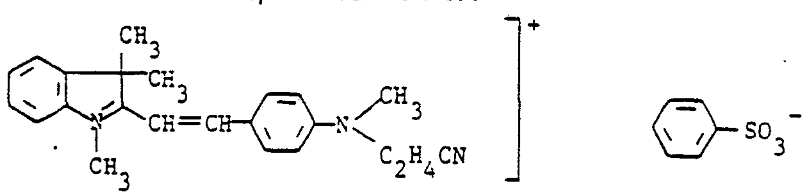

Er färbt Polyacrylnitril gelbstichig rot (C.I. Hue Indication Chart Nr. 49).

Beispiel 11

Bei 40 °C verrührt man in einem Laborschaufeltrockner 307 g 4-(N-Ethyl-N,β-chlorethyl-amino)-2-methyl-benzaldehyd, 197 g 4-(N-Methyl-N,β-chlorethyl-amino)-benzaldehyd und 409 g 1,3,3-Trimethyl-2-methylen-indolin und gibt dann 368 g geschmolzene Benzolsulfonsäure zu. Die Heizflüssigkeit des Schaufeltrockners wird nun binnen 25 min auf 100 °C geheizt und die erhaltene Schmelze kristallisiert nach weiteren 40 min. Der Farbstoff wird noch 2 h bei 100 °C zu einem feinen Pulver vermahlen. Das erhaltene Pulver ist ein Gemisch aus den Farbstoffen der Beispiele 7 und 8. Es färbt Polyacrylnitril in einem stark blaustichigen Rot (C.I. Hue Indication Chart Nr. 10).

Beispiel 12

In einem Laborschaufeltrockner werden 150 g 1,3,3-Trimethyl-2-methylen-indolin-5-carbonsäuremethylester und 166 g 4-(N-Methyl-N-(p-ethoxyphenyl)-amino)-benzaldehyd bei 70 °C vermischt und dann mit 110 g geschmolzener Benzolsulfonsäure versetzt. Dabei erhitzt sich die Mischung auf 97 °C und ergibt eine homogene Schmelze. Diese kristallisiert nach 20 min Nachrühren bei 95 °C und wird dann noch 4 h bei 95 °C zu einem feinen Pulver vermahlen. Der so erhaltene Farbstoff entspricht der Formel :

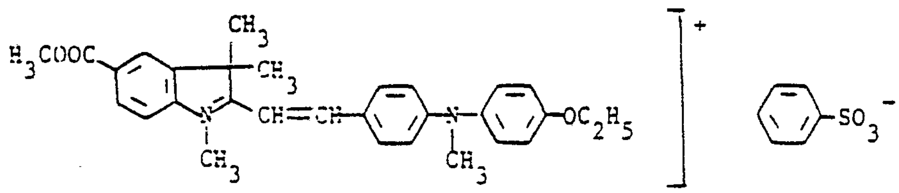

Er färbt Polyacrylnitril violett (C.I. Hue Indication Chart Nr. 12).

Beispiel 13

Bei 34 °C löst man in einem Laborschaufeltrockner 354 g 4-Diethylaminobenzaldehyd in 346 g 1,3,3-Trimethyl-2-methylen-indolin und gibt dann 340 g geschmolzene Benzolsulfonsäure zu. Dabei steigt die Temperatur der Lösung auf 103 °C. Nach 10 min Nachrühren bei 95 °C kristallisiert die Masse unter erneutem Temperaturanstieg auf 104 °C. Man vermahlt sie bei 95 °C im Schaufeltrockner zu einem feinen Pulver, welches den Farbstoff der Formel

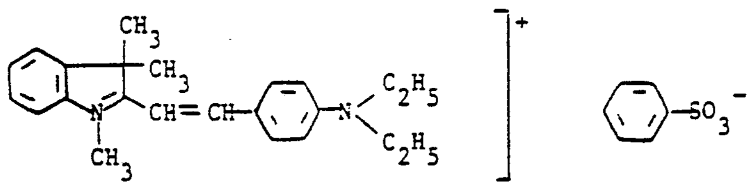

darstellt, welcher Polyacrylnitril stark blaustichig rot färbt. (C.I. Hue Indication Chart Nr. 10).

Beispiel 14

In einem Laborschaufeltrockner werden 298 g 4-Dimethylamino-benzaldehyd und 346 g 1,3,3-Trimethyl-2-methylen-indolin gemischt und dann mit 316 g geschmolzener Benzolsulfonsäure versetzt. Dabei steigt die Temperatur der Schmelze auf 100 °C. Nach 1 h Nachrühren bei 95 °C kristallisiert der Farbstoff. Man vermahlt ihn bei dieser Temperatur im Schaufeltrockner zu einem feinen Pulver. Der Farbstoff entspricht der Formel :

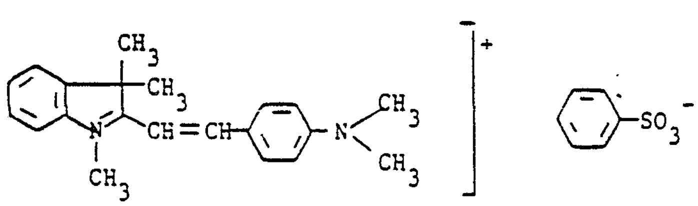

und färbt Polyacrylnitril rot (C.I. Hue Indication Chart Nr. 9).

Beispiel 15

415 g 1,3,3-Trimethyl-2-methylen-indolin-ω-aldehyd und 346 g 1,3,3-Trimethyl-2-methylen-indolin werden bei 30 °C in einem Laborschaufeltrockner gemischt. Dann tropft man 200 g Methansulfonsäure ein. Die Temperatur der Mischung steigt dabei auf 70 °C. Der Farbstoff kristallisiert nach 1,5 h Nachrühren bei 80 °C. Anschließend wird er noch 3 h bei dieser Temperatur im Schaufeltrockner pulverisiert. Er entspricht der Formel

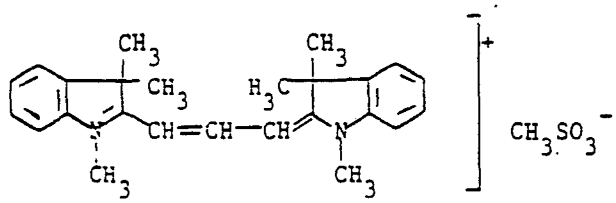

und ist gut zum Färben von Papier in blaustichig roten Tönen geeignet. (C.I. Hue Indication Chart Nr. 51).

Beispiel 16

173 g 1,3,3-Trimethyl-2-methylen-indolin und 245 g 4-(N-Methyl-N-(p-ethoxy-phenyl)-amino)-benzaldehyd werden bei 70 °C verrührt. Dann läßt man 100 g Methansulfonsäure zulaufen. Dabei erhitzt sich die Schmelze auf 107 °C. Sie wird 6 h im Schaufeltrockner verrührt und kristallisiert dann. Man vermahlt den erhaltenen Farbstoff zu einem Pulver. Er entspricht der Formel

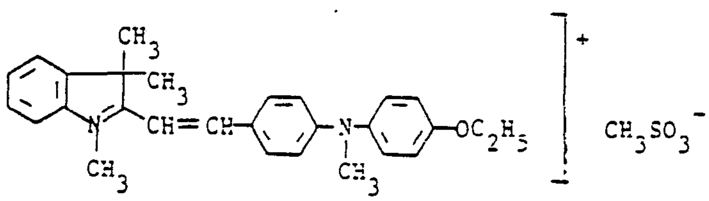

und färbt sauer modifizierte Polyesterfasern rotviolett (C.I. Hue Indication Chart Nr. 11).

Beispiel 17

In einem Laborschaufeltrockner vermischt man bei Raumtemperatur 875 g 1,3,3-Trimethyl-2-methylen-indolin und 745 g 4-Dimethylamino-benzaldehyd. Dann läßt man 500 g Methansulfonsäure einlaufen, wobei sich die Temperatur der Mischung auf 87 °C erhöht. Nach 7 h Nachrühren bei 95 °C erhält man ein kristallines Farbstoffpulver. Es enthält den Farbstoff der Formel

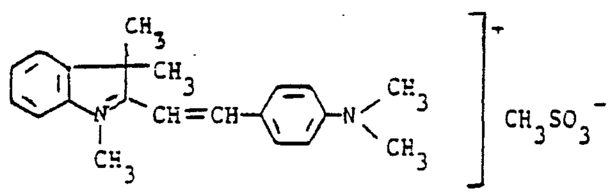

der Polyacrylnitril rot färbt (C.I. Hue Indication Chart Nr. 9).

Beispiel 18

In einem Laborschaufeltrockner mischt man 708 g 4-Diethylamino-benzaldehyd und 700 g 1,3,3-Trimethyl-2-methylen-indolin und läßt dann 392 g Methansulfonsäure einlaufen. Die Temperatur der Schmelze steigt dabei auf 98 °C. Man legt Vakuum an und mahlt das Produkt über Nacht bei 65 °C. Das erhaltene blaue Kristallpulver enthält noch ca. 0,1 % Aldehyd und 0,1 % Trimethylmethylenindolin. Es stellt den Farbstoff der Formel

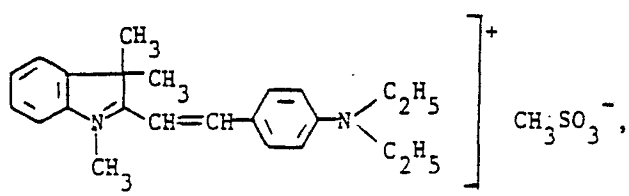

dar. Wegen seiner guten Löslichkeit in Alkoholen ist er für Anwendungen im Bürobedarfssektor sehr gut geeignet.

Beispiel 19

Man vermischt in einem Laborschaufeltrockner 376 g 4-(N-Methyl-N,β-cyanethylamino)-benzaldehyd und 350 g 1,3,3-Trimethyl-2-methylen-indolin und gießt dann 700 g einer 65 %igen wäßrigen Lösung von 4-Phenolsulfonsäure ein. Dann erwärmt man die Mischung auf 95 °C und destilliert im Vakuum der Wasserstrahlpumpe das Wasser ab. Anschließend wird im Vakuum bei 95 °C über Nacht gemahlen. Danach ist die Reaktion quantitativ verlaufen. Man erhält ein feines Pulver, das den Farbstoff der Formel

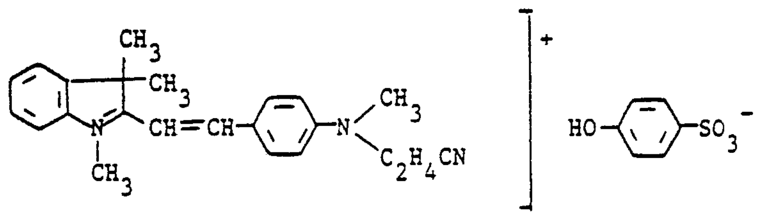

enthält, welcher Polyacrylnitril in einem klaren gelbstichigen Rot anfärbt (C.I. Hue Indication Chart Nr. 49).

Beispiel 20

235 g 1-Methyl-2-phenyl-indol-3-aldehyd und 203 g 1,3,3-Trimethyl-5-methoxy-2-methylen-indolin werden bei 70 °C in einem Laborschaufeltrockner gemischt und dann mit 159 g geschmolzener Benzolsulfonsäure versetzt. Anschließend wird die Mischung 24 h bei 95 °C im Vakuum der Wasserstrahlpumpe vermahlen. Man erhält den kristallinen Farbstoff der Formel

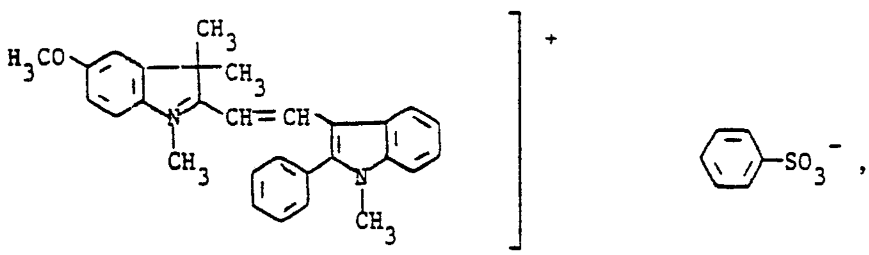

der Polyacrylnitril rotstichig orange färbt. (C.I. Hue Indication Chart Nr. 6).

Beispiel 21

Man verrührt 39,5 g 4-(N-Methyl-N,β-chlorethyl-amino)-benzaldehyd und 34,6 g 1,3,3-Trimethyl-2-methylen-indolin bei 40 °C und tropft dann 20 g Methansulfonsäure ein. Dabei steigt die Temperatur der Schmelze bis auf 84 °C. Man hält sie 3 h bei 95 °C, gibt 48 g Wasser zu und erhält so eine von Rückstand freie, hochkonzentrierte Lösung des Farbstoffes der Formel

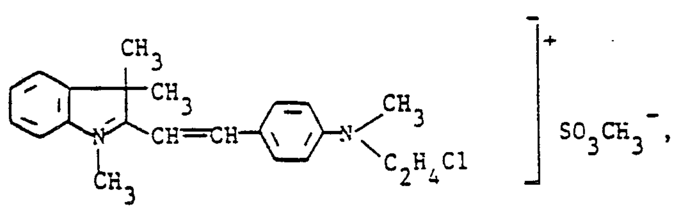

die Polyacrylnitril blaustichig rot färbt (C.I. Hue Indication Chart Nr. 50).

Eine stabile, hochkonzentrierte Flüssigeinstellung erhält man auch, wenn man wie vorstehend verfährt, jedoch statt 48 g Wasser eine Mischung von 33 g Propylenglykol und 15 g Wasser verwendet.

Ebenfalls gut geeignet ist eine Mischung aus 20 g Eisessig und 28 g Propylen- oder Ethylenglykol.

Die vorstehend beschriebene Kondensation wird beschleunigt, wenn man sie unter Vakuum durchführt und dadurch das Kondensationswasser laufend entfernt. Da dabei die Schmelze sehr zäh wird, hält man sie durch Eintropfen von 5 g Hydroxypropionitril gut rührbar.

Beispiel 22

Man verrührt 34,7 g 4-(N-Methyl-N,β-cyanethyl-amino)-benzaldehyd mit 31,9 g 1,3,3-Trimethyl-2-methylen-indolin bei 40 °C und tropft dann 18,5 g Methansulfonsäure ein. Dabei steigt die Temperatur der Schmelze bis auf 80 °C. Nach 3 h Rühren bei 95 °C liegt der Gehalt an Ausgangsprodukten unter 0,5 %. Man verdünnt sie mit 85,1 g Wasser und 26,8 g Eisessig und erhält eine stabile Flüssigeinstellung des Farbstoffes der Formel

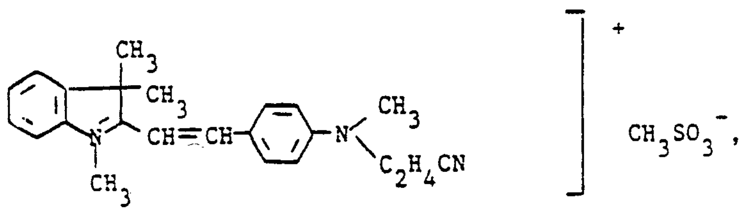

die Polyacrylnitril gelbstichig rot färbt (C.I. Hue Indication Chart Nr. 49).

Eine stabile Flüssigeinstellung erhält man auch, wenn man wie vorstehend beschrieben arbeitet, doch den Eisessig durch Propylenglykol ersetzt.

Auch durch Verdünnen der Schmelze mit 85,1 g Propylenglykol oder Ethylenglykol und 26,8 g Eisessig erhält man eine stabile Flüssigeinstellung.

Man kann die vorstehend beschriebene Kondensation beschleunigen, wenn man durch Anlegen von Vakuum das Kondensationswasser laufend abdestilliert. Dabei wird die Schmelze zäh, und man hält sie durch Eintropfen von 5 g Hydroxypropionitril gut rührbar.

Beispiel 23

Man verrührt 35,4 g 4-Diethylamino-benzaldehyd und 34,6 g 1,3,3-Trimethyl-2-methylen-indolin bei 50 °C und tropft dann 20 g Methansulfonsäure ein. Dabei steigt die Temperatur bis auf 105 °C. Nach 2 h Nachrühren bei 95 °C gibt man 108 g Wasser zu und erhält nach dem Erkalten eine von Rückstand freie Lösung des Farbstoffes der Formel

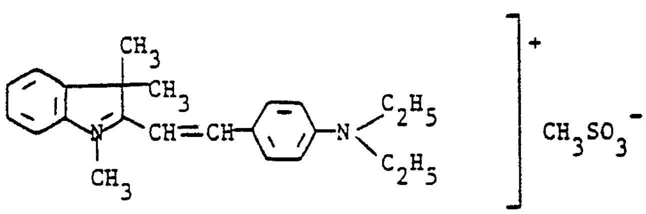

welche Polyacrylnitril stark blaustichig rot färbt (C.I. Hue Indication Chart Nr. 10).

Beispiel 24

Man verfährt wie in Beispiel 16 angegeben ist, jedoch beendet man die Nachrührzeit bereits nach 4 h, d. h. ehe die Schmelze kristallisiert ist, und gibt dann eine Lösung von 160 g Eisessig in 285 g Wasser zu. Nach dem Erkalten erhält man so eine von Rückstand freie, konzentrierte, stabile Lösung des Farbstoffes des Beispiels 16, die hervorragend zum Färben von Polyacrylnitril geeignet ist.

Beispiel 25

Man setzt 87,5 g 1,3,3-Trimethyl-2-methylen-indolin, 74,5 g 4-Dimethylamino-benzaldehyd und 50 g Methansulfonsäure wie im Beispiel 17 beschrieben miteinander um, beendet die Nachrührzeit jedoch bereits nach 3 h, d. h. ehe die Schmelze kristallisiert, gibt 258 ml Wasser zu und erhält so nach dem Erkalten eine von Rückstand freie Lösung des in Beispiel 17 beschriebenen Farbstoffes, die gut als Färbepräparation zum Färben von sauer modifizierten Synthesefasern geeignet ist.

Setzt man statt Wasser eine Lösung von 47 g Eisessig in 211 g Wasser oder eine Lösung von 47 g Propylenglykol in 211 g Wasser oder eine Lösung von 58 g Ethylenglykol in 200 g Wasser ein, erhält man ebenfalls Flüssigeinstellungen, die keinen Rückstand enthalten und stabil sind. Gut geeignet sind auch Gemische aus Glykolen und Eisessig.

Beispiel 26

Man verrührt 29,3 g 4-(N-Ethyl-N,β-chlorethylamino)-2-methyl-benzaldehyd, 19,7 g 4-(N-Methyl-N,β-chlorethylamino)-benzaldehyd und 39,8 g 1,3,3-Trimethyl-2-methylen-indolin bei 40 °C und tropft dann 23

g Methansulfonsäure ein. Die Schmelze wird 6 h bei 95 °C nachgerührt und dann in einer Lösung von 36 g Propylenglykol in 34 g Wasser gelöst. Man erhält eine von Rückstand freie stabile Flüssigeinstellung, die die Farbstoffe der Formeln

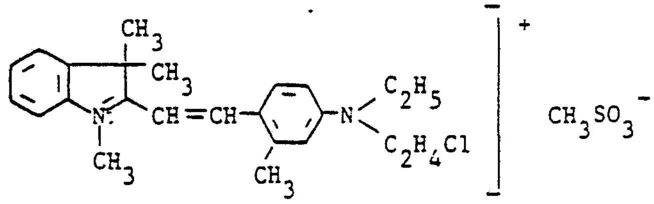

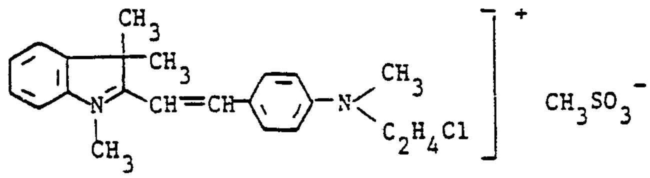

enthält und ausgezeichnet als Präparation zum Färben von Polyacrylnitril in einem blaustichigen Rot geeignet ist (C.I. Hue Indication Chart Nr. 10).

Eine stabile Flüsssigeinstellung erhält man auch, wenn man als Lösungsmittel ein Gemisch aus 36 g Eisessig und 34 g Propylenglykol einsetzt.

Beispiel 27

Man verrührt 45,1 g 4-(N-Ethyl-N,β-chlorethyl-amino)-2-methyl-benzaldehyd und 35 g 1,3,3-Trimethyl-2-methylen-indolin bei 40 °C und läßt dann 20,5 g Methansulfonsäure einlaufen. Dabei erhitzt sich die Schmelze bis auf 107 °C. Im Vakuum der Wasserstrahlpumpe wird nun 3 h lang bei 95 °C das Kondensationswasser abdestilliert. Dabei hält man die Schmelze durch Eintropfen von 5 g β-Hydroxypropionitril gut rührbar. Anschließend wird sie in einer Mischung aus 38 g Eisessig und 50 g Propylenglykol gelöst. Dabei erhält man eine von Rückstand freie stabile Flüssigeinstellung des Farbstoffes der Formel

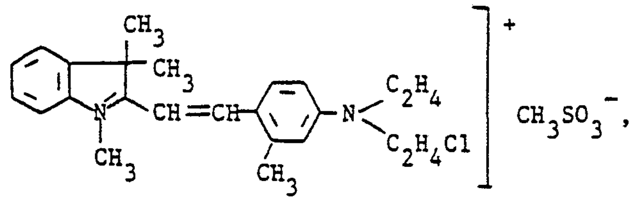

die Polyacrylnitril stark blaustichig rot färbt. (C.I. Hue Indication Chart Nr. 11).

Beispiel 28

Man verrührt 35,4 g 4-Diethylamino-benzaldehyd und 35 g 1,3,3-Trimethyl-2-methylen-indolin und gießt dann 20,5 g Methansulfonsäure ein. Die Temperatur der Schmelze steigt auf 91 °C. Man rührt bei 50 °C nach. Die Kondensation erfolgt dennoch ebenso schnell wie in Beispiel 23, wenn man dauernd das Kondensationswasser im Vakuum der Wasserstrahlpumpe abdestilliert. Dabei wird die Schmelze sehr zähflüssig. Um sie gut rührbar zu halten, gibt man 5 g β-Oxypropionitril und 10 g 1,2-Propandiol zu. Nach 3 h verdünnt man mit 39 g Eisessig und 49 g Propandiol, kühlt ab und erhält eine von Rückstand freie stabile Flüssigeinstellung des Farbstoffes des Beispiels 23.

Beispiel 29

318 g 2,3,3-Trimethyl-indolenin und 348 g 4-Diethylamino-benzaldehyd werden in einem Laborschaufeltrockner bei 40 °C vermischt und 344 g Benzolsulfonsäuremethylester zugesetzt. Man erwärmt das Reaktionsgemisch langsam auf 100 °C. Die Farbstoffbildung beginnt bei 90 °C, wobei die Temperatur bis auf 105 °C ansteigt. Nach 45 min ist das Reaktionsgemisch kristallisiert. Man läßt den Schaufeltrockner 4 h bei 100 °C laufen, davon 1 h unter Anlegen von Vakuum. Es werden 953 g des Farbstoffes der Formel

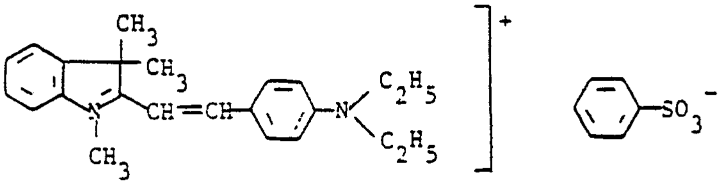

erhalten, der Polyacrylnitrilmaterialien rotviolett anfärbt. (C.I. Hue Indication Chart Nr. 10).

Beispiel 30

In einem Laborschaufeltrockner werden 318 g 2,3,3-Trimethyl-indolenin und 348 g 4-Diethylamino-benzaldehyd bei 40 °C vermischt und 372 g 4-Methylbenzolsulfonsäuremethylester zugesetzt. Man erwärmt das Reaktionsgemisch auf 100 °C und läßt es 12 h bei dieser Temperatur rühren. Dann setzt man 500 g Propylenglykol und 500 g Wasser zu und hält die Temperatur weitere 3 h auf 100 °C. Nach Abkühlen auf Raumtemperatur filtriert man und erhält 1 980 g einer stabilen Lösung des in Beispiel 1 beschriebenen Farbstoffes, der Polyacrylnitrilmaterialien rotviolett anfärbt.

Beispiel 31

In einem Laborschaufeltrockner werden 195 g 4-(N-Methyl-N,β-cyanethyl-amino)-benzaldehyd und 159 g 2,3,3-Trimethyl-indolenin bei 50 °C verrührt und 172 g Benzolsulfonsäuremethylester zugegeben. Die Temperatur steigt langsam bis auf 99 °C an. Man läßt den Schaufeltrockner 7 h bei 100 °C laufen und versetzt das Reaktionsgemisch mit 250 g Wasser und 250 g β-Hydroxy-propionitril. Nach 3 stündigem Rühren bei 100 °C kühlt man die Lösung ab und filtriert sie. Man erhält 1 010 g einer Lösung des Farbstoffes der Formel :

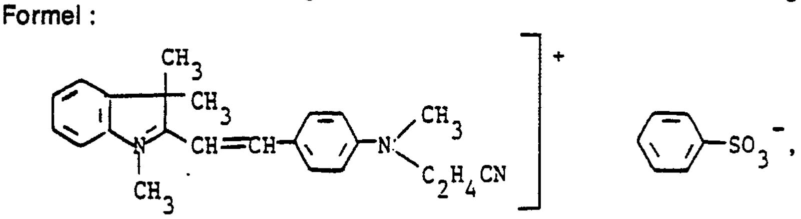

der Polyacrylnitrilfasern in klaren roten Tönen anfärbt (C.I. Hue Indication Chart Nr. 49).

Beispiel 32

In einem Laborschaufeltrockner löst man 354 g 4-Diethylamino-benzaldehyd in 318 g 2,3,3-Trimethylindolenin. Dann gibt man unter gutem Rühren bei Raumtemperatur 252 g Dimethylsulfat zu. Dabei steigt die Temperatur des Reaktionsgemisches auf 100 °C an. Nach 30 min Rühren bei 95 °C legt man das Vakuum der Wasserstrahlpumpe an und destilliert das Kondensationswasser ab. Dann wird noch 2 h bei 95 °C und anschließend bei 65 °C über Nacht im Vakuum gerührt. Man erhält den Farbstoff der Formel

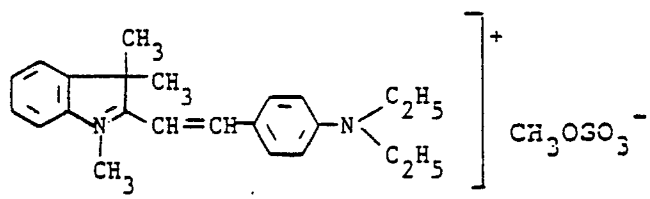

als feines Pulver. Er färbt Polyacrylnitril stark blaustichig rot (C.I. Hue Indication Chart Nr. 10).

Beispiel 33

Zu 181,8 g einer rohen Qualität von 2,3,3-Trimethyl-indolenin, die einen Reingehalt von 87,5 % und 9 % Wasser enthält, tropft man binnen 30 min 143,2 g Dimethylsulfat. Dabei sorgt man durch gelinde Wasserkühlung dafür, daß die Temperatur nicht über 45 °C steigt. Der pH-Wert wird gleichzeitig durch Eintropfen konzentrierter Natronlauge bei 4-4,2 gehalten. Es wird 30 min bei 45 °C und pH 4,2 nachgerührt, mit 6,5 g Dimethylsulfat versetzt und nochmals 30 min gerührt. Dann setzt man 188 g 4-(N-Methyl-N,β-cyanethylamino)-benzaldehyd zu, erwärmt auf 70 °C und rührt bei dieser Temperatur im Vakuum der Wasserstrahlpumpe über Nacht. Sobald die Schmelze zu zäh wird, hält man sie durch allmähliches Eintropfen von 30 g β-Hydroxypropionitril und 60 g Ethylenglykol gut rührbar. Am nächsten Morgen wird mit 120 g Ethylenglykol, 120 g Propylenglykol, 225 g Eisessig und 370 g Wasser verdünnt, und man erhält eine stabile Flüssigeinstellung des Farbstoffes der Formel

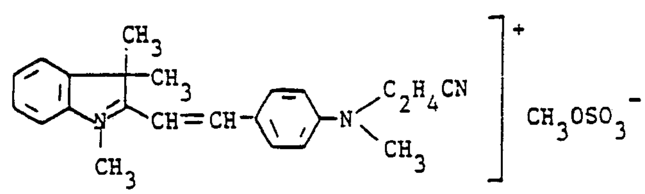

die gut zum Färben von Polyacylnitril in brillanten roten Tönen geeignet ist. (C.I. Hue Indication Chart Nr. 49).

Beispiel 34

Zu 181,8 g 2,3,3-Trimethyl-indolenin (ca. 87,5 %ig = 159 g 100 %ig) tropft man unter $N_2$ bei Raumtemperatur beginnend innerhalb von 20-30 min. 143,2 g Dimethylsulfat. Dabei bemißt man die Kühlung mit Wasser so, daß die Temperatur bis 45 °C steigt und auf diesem Wert gehalten wird. Gleichzeitig hält man den pH-Wert durch Zutropfen von ca. 35 g Triisopropanolamin, die durch Mischen mit ca. 8 ml Wasser flüssig gehalten werden, auf 4, zuletzt auf 4,2. Nach 30 min Nachrühren bei 45 °C und pH 4,2 tropft man noch 6,5 g Dimethylsulfat ein und rührt nochmals 30 min bei 45 °C und pH 4,2 nach. Dann liegt der Restgehalt an Indolenin bei 0,2 %. Man gibt jetzt 177 g 4-Diethylamino-benzaldehyd (99 %ig) zu, erwärmt auf 75 °C und rührt bei dieser Temperatur 5 h im Vakuum der Wasserstrahlpumpe und dann bei 70 °C über Nacht. Sobald dabei die Schmelze zu zäh wird, tropft man langsam 20 g Ethylenglykol ein. Am nächsten Morgen liegt in der Schmelze ein Restgehalt von 0,3 % Aldehyd und 0,2 % 1,3,3-Trimethyl-2-methylen-indolin vor. Man tropft bei 70 °C ein : 90 g Ethylenglykol, rührt 2 h bei 70 °C und verdünnt dann mit 230 g Eisessig und setzt 20 g eines Alkylphenolpolyglykolethers, 1 g eines Entschäumers und 26 g Hydroxypropionitril zu. Nach dem Filtrieren bei Raumtemperatur erhält man 970 g einer stabilen Flüssigeinstellung des in Beispiel 32 formelmäßig angegebenen Farbstoffes, die sauer modifizierte Synthesefasern blaustichig rot färbt.

**Patentansprüche**

1. Verfahren zur Herstellung von kationischen Methinfarbstoffen der allgemeinen Formel

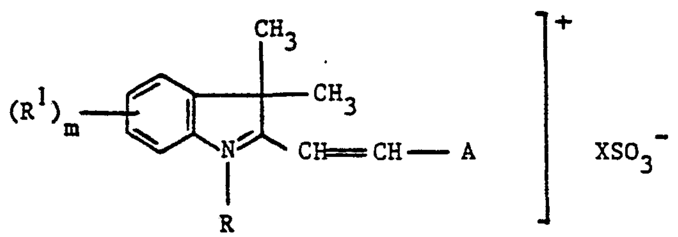

in welcher
R für einen gegebenenfalls durch Hydroxy, Alkoxy mit 1 bis 4 C-Atomen, Acyloxy, Halogen, Cyan, Carboxy, $C_1$-bis $C_4$-Carbalkoxy, Carbonamido oder Acetyl substituierten Alkylrest mit 1 bis 4 C-Atomen,
$R^1$ für Wasserstoff, Alkyl mit 1 bis 4 C-Atomen, Halogen, Alkoxy mit 1 bis 4 C-Atomen, Hydroxyalkoxy mit 2 bis 4 C-Atomen, einen gegebenenfalls durch Halogen, $C_1$-bis $C_4$-Alkyl oder $C_1$-bis $C_4$-Alkoxy substituierten Phenoxy-, Benzyloxy- oder Benzyl-Rest, Carboxyl, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenyl-sulfonyl, eine Cyan-, Trifluormethyl-, Acetyl- oder Benzoylgruppe,
A für einen Rest der Formel

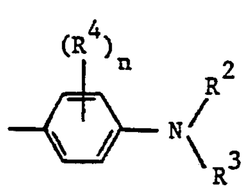

in welcher
$R^2$ und $R^3$ unabhängig voneinander für einen gegebenenfalls durch Hydroxy, $C_1$- bis $C_4$-Alkoxy, Halogen, Cyan, Phenyl, Carbalkoxy mit 1 bis 4 C-Atomen, Carbonamido, Acyloxy, Benzyloxy, Sulfonamido oder Acylamino substituierten Alkylrest mit 1 bis 4 C-Atomen stehen,
$R^2$ zusätzlich für einen gegebenenfalls durch Halogen, $C_1$- bis $C_4$-Alkyl oder $C_1$- bis $C_4$-Alkoxy substituierten Phenyl- oder Benzylrest steht oder mit dem benachbarten C-Atom des Benzolringes einen teilhydrierten N- und gegebenenfalls O-haltigen 5- oder 6-Ring bilden kann,
$R^4$ Wasserstoff, einen Alkylrest mit 1 bis 4 C-Atomen, einen Alkoxyrest mit 1 bis 4 C-Atomen oder Halogen bedeutet, oder für einen Rest der Formel

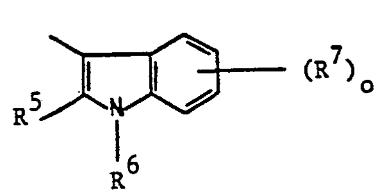

in welcher

$R^5$ für einen Alkylrest mit 1 bis 4 C-Atomen, einen gegebenenfalls durch Halogen, $C_1$- bis $C_4$-Alkyl oder $C_1$- bis $c_4$-Alkoxy substituierten Phenylrest oder einen Carbalkoxyrest mit 1 bis 4 C-Atomen,

$R^6$ für Wasserstoff, einen gegebenenfalls durch Hydroxy, Halogen, Alkoxy mit 1 bis 4 C-Atomen, Cyan oder Acyloxy substituierten Alkylrest mit 1 bis 4 C-Atomen,

$R^7$ für Wasserstoff, Halogen, $C_1$- bis $C_4$-Alkyl, $C_1$- bis $C_4$-Alkoxy, Carbalkoxy mit 1 bis 4 C-Atomen, $C_1$- bis $C_4$-Alkylsulfonyl, Phenylsulfonyl, Acetyl oder Benzoyl stehen, oder für einen Rest der Formel

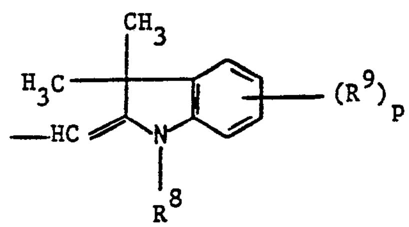

stehen, in welcher $R^8$ und $R^9$ unabhängig voneinander die gleiche Bedeutung wie R und $R^1$ haben, in welcher

X Aryl, Alkyl mit 1-4 C-Atomen oder Alkoxy mit 1-4 C-Atomen und

m, n, o und p unabhängig voneinander 1 bis 4 bedeuten,

durch Kondensation einer Methylenverbindung der Formel

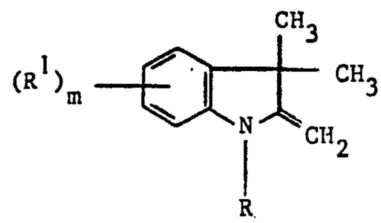

oder eines Salzes der Formel

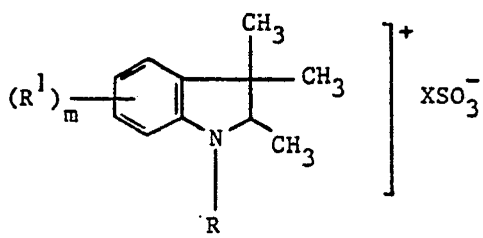

worin R, $R^1$, X und m die oben angegebene Bedeutung haben, mit einer Verbindung der Formel

A—CHO

worin A die oben angegebene Bedeutung besitzt, und Säuren, dadurch gekennzeichnet, daß man die Kondensation der Methylenverbindung mit 1-7 Mol einer Säure der Formel

$XSO_3H$

bzw. des Salzes mit 0-6 Mol der Säure in Gegenwart von 0-30 Gew.-% eines organischen Lösungsmittels und von 0-15 Gew.-% Wasser (beide Prozentangaben bezogen auf das Gesamtgewicht der organischen Ausgangskomponenten) durchführt.

2. Verfahren gemäß Anspruch 1 zur Herstellung von kationischen Methinfarbstoffen der allgemeinen Formel

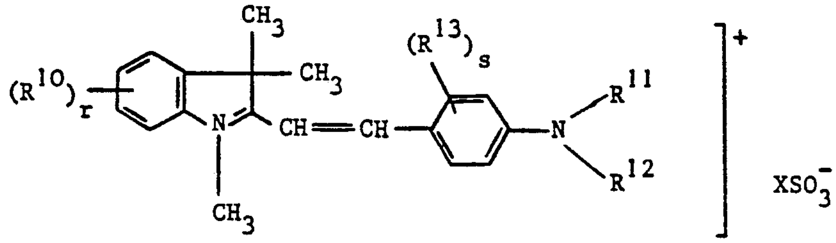

in welcher

$R^{10}$ für Wasserstoff, Chlor, Methyl, Methoxy, Ethoxy oder Carbomethoxy,

$R^{11}$ und $R^{12}$ unabhängig voneinander für einen gegebenenfalls durch Hydroxy, Methoxy, Ethoxy, Chlor, Cyan, Phenyl oder Acyloxy substituierten Alkylrest mit 1 bis 4 C-Atomen stehen und

$R^{11}$ zusätzlich einen gegebenenfalls durch Chlor, Methyl, Methoxy oder Ethoxy- substituierten Phenylrest bezeichnet oder mit dem benachbarten C-Atom des Benzolringes einen teilhydrierten N- und gegebenefalls O-haltigen 5- oder 6-Ring bilden kann,

$R^{13}$ Wasserstoff, Methyl, Chlor, Methoxy oder Ethoxy und

r und s 0, 1 oder 2 bedeuten, und

X die gleiche Bedeutung wie in Anspruch 1 hat,

durch Kondensation einer Verbindung der Formel

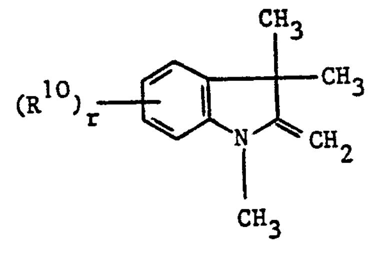

oder einer Verbindung der Formel

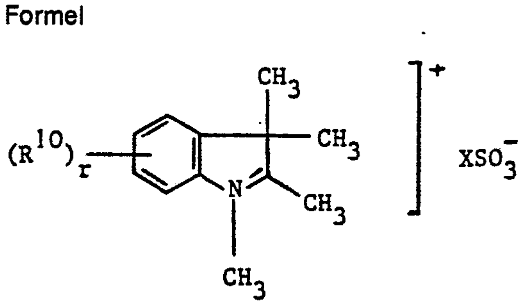

worin $R^{10}$, X und r die oben angegebene Bedeutung haben, mit äquimolekularen Mengen einer Verbindung der Formel

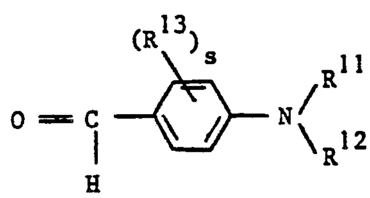

worin $R^{11}$, $R^{12}$, $R^{13}$ und s die oben angegebene Bedeutung haben, und mit 1 bis 7 bzw. 0 bis 6 Mol einer Säure der Formel

$$XSO_3H$$

3. Verfahren gemäß Anspruch 1, dadurch gekennzeichnet, daß man säuren der Formel $XSO_3H$ einsetzt, worin X für einen gegebenenfalls durch 1 bis 3 Alkylreste mit 1 bis 4 C-Atomen, Alkoxyreste mit 1 bis 4 C-Atomen, Halogen oder Hydroxyl substituierten Phenylrest oder die Methylgruppe steht.

4. Verfahren gemäß Anspruch 1, dadurch gekennzeichnet, daß man die Kondensation in einem Festphasenreaktor mit rotierenden Einbauten durchführt.

5. Verfahren gemäß Anspruch 4, dadurch gekennzeichnet, daß man die Kondensation in Reaktionsschnecken, Knetapparaturen, Schaufeltrocknern oder Allphasenreaktoren durchführt.

6. Verfahren gemäß Anspruch 1, dadurch gekennzeichnet, daß man zur Herstellung von verkaufsfertigen Farbstoffeinstellungen zu der in einem Schaufeltrockner durchgeführten Umsetzung vor, während oder nach der Reaktion Stellmittel zusetzt.

7. Verfahren gemäß Anspruch 1, dadurch gekennzeichnet, daß man der ohne Zusatz anorganischer Salze hergestellten Farbstoffschmelze soviel Wasser oder mit Wasser mischbares organisches Lösungsmittel zusetzt, daß unmittelbar eine stabile, konzentrierte Flüssigeinstellung des Farbstoffes mit einem Farbstoffgehalt von 10-50 % erhalten wird.

8. Verfahren gemäß Anspruch 1, dadurch gekennzeichnet, daß man Verbindungen der allgemeinen Formel

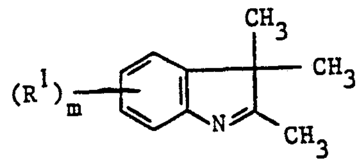

in welcher $R^1$ und m die gleiche Bedeutung wie in Anspruch 1 haben mit Verbindungen der Formel

$$XSO_3R,$$

worin X und R die gleiche Bedeutung wie in Anspruch 1 haben, zu Verbindungen der allgemeinen Formel

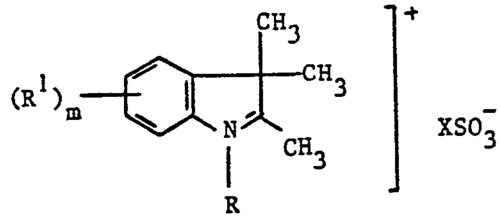

worin R, $R^1$, m und X die in Anspruch 1 angegebene Bedeutung besitzen, umsetzt und diese ohne Zwischenisolierung mit den in Anspruch 1 angegebenen Aldehyden A—CHO kondensiert.

9. Verfahren gemäß Anspruch 1, dadurch gekennzeichnet, daß man Verbindungen der Formeln

A—CHO,

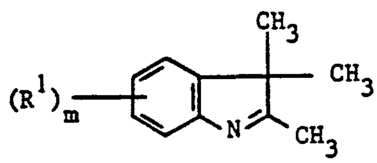

und

$$XSO_3R,$$

worin A, R, $R^1$, m und X die in Anspruch 1 angegebene Bedeutung haben, durch direktes Vermischen in einer Reaktionsapparatur, die in der Lage ist, zähflüssige und später kristallisierende Farbstoffschmelzen gleichmäßig zu vermischen, zur Umsetzung bringt.

10. Verwendung der nach Anspruch 1 hergestellten Farbstoffsalze zum Färben von tannierter Baumwolle, sauer modifizierten Polyamid- und Polyesterfasern, von holzschliffhaltigem Papier, von Leder sowie zur Herstellung von Kugelschreiberpasten, Tinten und Stempelfarben, insbesondere zum Färben von Materialien aus Polyacrylnitril.

**Claims**

1. Process for preparing cationic methine dyestuffs of the general formula

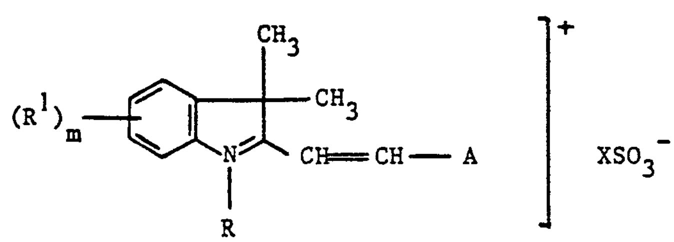

in which

R represents an alkyl radical which has 1 to 4 C atoms and is optionally substituted by hydroxyl, alkoxy having 1 to 4 C atoms, acyloxy, halogen, cyano, carboxyl, $C_1$- to $C_4$-carbalkoxy, carboxamido or acetyl,

$R^1$ represents hydrogen, alkyl having 1 to 4 C atoms, halogen, alkoxy having 1 to 4 C atoms,

hydroxyalkoxy having 2 to 4 C atoms, an optionally halogen-, $C_1$- to $C_4$-alkyl or $C_1$- to $C_4$-alkoxy-substituted phenoxy, benzyloxy or benzyl radical, carboxyl, an alkyl carboxylate having 1 to 4 C atoms, a carboxamide group which is optionally substituted by 1 or 2 $C_1$- to $C_4$-alkyl radicals, a sulphonamide group which is optionally substituted by 1 or 2 $C_1$- to $C_4$-alkyl radicals, alkylsulphonyl having 1 to 4 C atoms, phenylsulphonyl or a cyano, trifluoromethyl, acetyl or benzoyl group,

A represents a radical of the formula

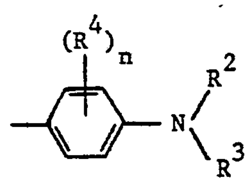

in which

$R^2$ and $R^3$ independently of each other represent an alkyl radical which has 1 to 4 C atoms and is optionally substituted by hydroxyl, $C_1$- to $C_4$-alkoxy, halogen, cyano, phenyl, carbalkoxy having 1 to 4 C atoms, carboxamido, acyloxy, benzyloxy, sulphonamido or acylamino,

$R^2$ also represents an optionally halogen-, $C_1$- to $C_4$-alkyl- or $C_1$- to $C_4$-alkoxy-substituted phenyl or benzyl radical, or together with the adjacent C atom of the benzene ring can form a partially hydrogenated 5- or 6-ring containing N and optionally 0, and

$R^4$ denotes hydrogen, an alkyl radical having 1 to 4 C atoms, an alkoxy radical having 1 to 4 C atoms or halogen, or a radical of the formula

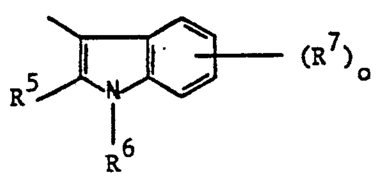

in which

$R^5$ represents an alkyl radical having 1 to 4 C atoms, an optionally halogen-, $C_1$-- to $C_4$-alkyl- or $C_1$- to $C_4$-alkoxy-substituted phenyl radical or a carbalkoxy radical having 1 to 4 C atoms,

$R^6$ represents hydrogen or an alkyl radical which has 1 to 4 C atoms and is optionally substituted by hydroxyl, halogen, alkoxy having 1 to 4 C atoms, cyano or acyloxy, and

$R^7$ represents hydrogen, halogen, $C_1$- to $C_4$-alkyl, $C_1$- to $C_4$-alkoxy, carbalkoxy having 1 to 4 C atoms, $C_1$- to $C_4$-alkylsulphonyl, phenylsulphonyl, acetyl or benzoyl, or a radical of the formula

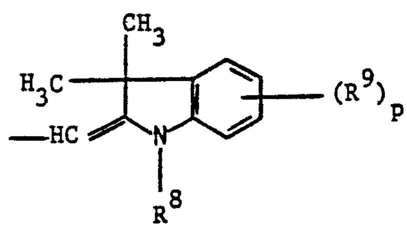

in which $R^8$ and $R^9$ independently of each other have the same meaning as R and $R^1$,

in which

X denotes aryl, alkyl having 1-4 C atoms or alkoxy having 1-4 C atoms, and

m, n, o and p independently of one another denote 1 to 4,

by condensing a methylene compound of the formula

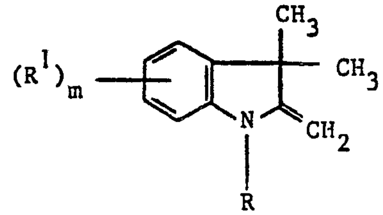

or a salt of the formula

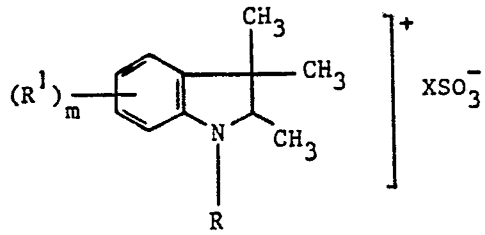

in which R, $R^1$, X and m have the abovementioned meaning, with a compound of the formula

A—CHO

in which A has the abovementioned meaning, and acids, characterised in that the condensation of the methylene compound with 1-7 mols of an acid of the formula

$XSO_3H$

or of the salt with 0-6 mols of the acid is carried out in the presence of 0-30 % by weight of an organic solvent and of 0-15 % by weight of water (both percentages relative to the total weight of the organic starting components).

2. Process according to Claim 1 for preparing cationic methine dyestuffs of the general formula

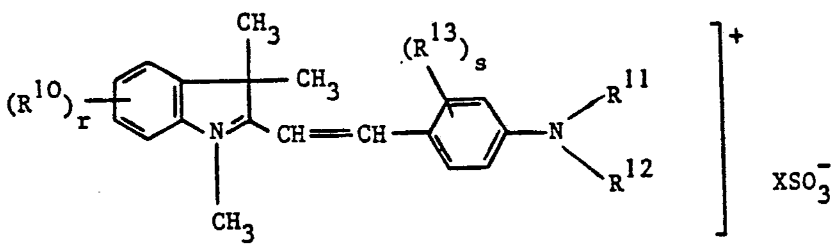

in which

$R^{10}$ represents hydrogen, chlorine, methyl, methoxy, ethoxy or carbomethoxy,

$R^{11}$ and $R^{12}$ independently of each other represent an alkyl radical which has 1 to 4 C atoms and is optionally substituted by hydroxyl, methoxy, ethoxy, chlorine, cyano, phenyl or acyloxy, and

$R^{11}$ also designates a phenyl radical which is optionally substituted by chlorine, methyl, methoxy or ethoxy, or together with the adjacent C atom of the benzene ring can form a partially hydrogenated 5- or 6-ring containing N and optionally 0, and

$R^{13}$ denotes hydrogen, methyl, chlorine, methoxy or ethoxy, and

r and s denote 0, 1 or 2, and

X has the same meaning as in Claim 1,

by condensing a compound of the formula

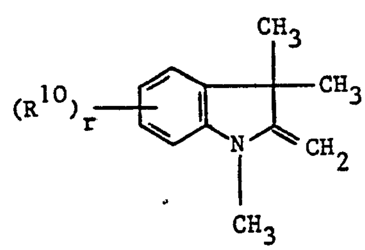

or a compound of the formula

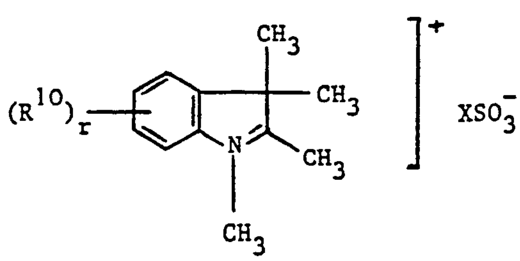

wherein $R^{10}$, x and r have the abovementioned meaning, with equimolar amounts of a compound of the formula

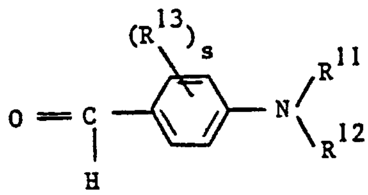

wherein $R^{11}$, $R^{12}$, $R^{13}$ and s have the abovementioned meaning, and with 1 to 7 or 0 to 6 mols of an acid of the formula

$XSO_3H$.

3. Process according to Claim 1, characterised in that acids are used which have the formula $XSO_3H$ wherein X represents a phenyl radical which is optionally substituted by 1 to 3 alkyl radicals having 1 to 4 C atoms, alkoxy radicals having 1 to 4 C atoms, halogen or hydroxyl, or the methyl group.

4. Process according to Claim 1, characterised in that the condensation is carried out in a solid-phase reactor having rotating internal fitments.

5. Process according to Claim 4, characterised in that the condensation is carried out in reaction screws, kneading machines, paddle dryers or all-phase reactors.

6. Process according to Claim 1, characterised in that to prepare marketable dyestuff formulations, standardising agents are added to the conversion which is carried out in a paddle dryer before, during or after the reaction.

7. Process according to Claim 1, characterised in that sufficient water or organic solvent miscible with water is added to the dyestuff melt prepared without the addition of inorganic salts that a stable, concentrated liquid formulation of the dyestuff containing 10-50 % of the dyestuff is obtained directly.

8. Process according to Claim 1, characterised in that compounds of the general formula

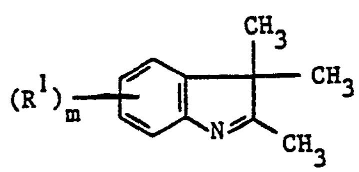

in which $R^1$ and m have the same meaning as in Claim 1, are reacted with compounds of the formula

$XSO_3R$

wherein X and R have the same meaning as in Claim 1, to give compounds of the general formula

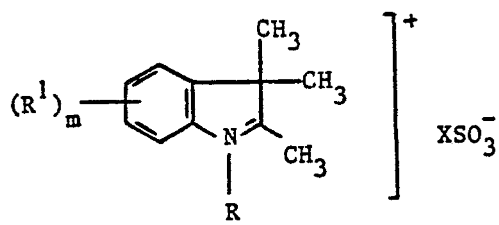

wherein R, $R^1$, m and X have the meaning given in Claim 1, and these compounds are condensed without intermediate isolation with the A—CHO aldehydes indicated in Claim 1.

9. Process according to Claim 1, characterised in that compounds of the formulae

A—CHO,

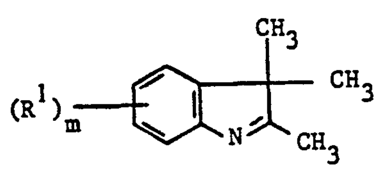

and

$XSO_3R$

wherein A, R, $R^1$, m and X have the meaning indicated in Claim 1, are reacted by direct mixing in a reaction apparatus which is capable of homogeneously mixing viscous and subsequently crystallising dyestuff melts.

10. Use of the dyestuffsalts prepared according to Claim 1, for dyeing mordanted cotton, acid-modified polyamide and polyester fibres, paper containing mechanical wood pulp, and leather, and for preparing ball-point pen pastes, inks and stamping inks, and in particular for dyeing polyacrylonitrile materials.

**Revendications**

1. Procédé de préparation de colorants cationiques de méthines de formule générale

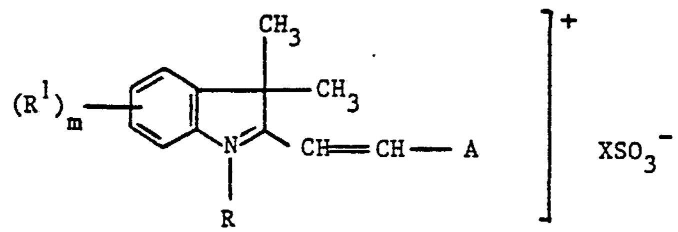

dans laquelle

R représente un groupe alkyle en $C_1$-$C_4$ portant éventuellement des substituants hydroxy, alcoxy en $C_1$-$C_4$, acyloxy, halogéno, cyano, carboxy, carbalcoxy en $C_1$-$C_4$, carboxamido ou acétyle,

$R^1$ représente l'hydrogène, un groupe alkyle en $C_1$-$C_4$, un halogène, un groupe alcoxy en $C_1$-$C_4$, hydroxyalcoxy en $C_2$-$C_4$, un groupe phénoxy, benzyloxy ou benzyle portant éventuellement des substituants halogéno, alkyle en $C_1$-$C_4$ ou alcoxy en $C_1$-$C_4$, un groupe carboxyle, un carboxylate d'alkyle en $C_1$-$C_4$, un groupe carboxamide éventuellement substitué par un ou deux groupes alkyle en $C_1$-$C_4$, un groupe sulfonamide éventuellement substitué par 1 ou 2 groupes alkyle en $C_1$-$C_4$, un groupe alkylsulfonyle en $C_1$-$C_4$, phényl-sulfonyle, un groupe cyano, trifluorométhyle, acétyle ou benzoyle,

A représente un reste de formule

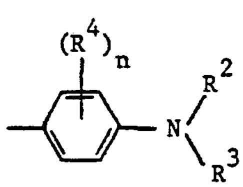

dans laquelle

$R^2$ et $R^3$ représentent, indépendamment l'un de l'autre, un groupe alkyle en $C_1$-$C_4$ portant éventuellement des substituants hydroxy, alcoxy en $C_1$-$C_4$, halogéno, cyano, phényle, carbalcoxy en $C_1$-$C_4$, carboxamido, acyloxy, benzyloxy, sulfonamido ou acylamino,

$R^2$ représente en outre un groupe phényle ou benzyle portant éventuellement des substituants halogéno, alkyle en $C_1$-$C_4$ ou alcoxy en $C_1$-$C_4$ ou peut former avec l'atome de carbone voisin du cycle benzénique un cycle à 5 ou 6 chaînons partiellement hydrogéné contenant de l'azote et éventuellement de l'oxygène,

$R^4$ représente l'hydrogène, un groupe alkyle en $C_1$-$C_4$, un groupe alcoxy en $C_1$-$C_4$ ou un halogène, ou un reste de formule

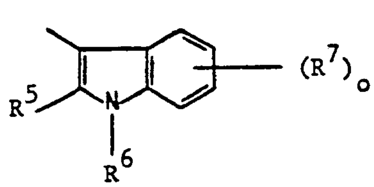

dans laquelle

$R^5$ représente un groupe alkyle en $C_1$-$C_4$, un groupe phényle portant éventuellement des substituants halogéno, alkyle en $C_1$-$C_4$ ou alcoxy en $C_1$-$C_4$, ou un groupe carbalcoxy en $C_1$-$C_4$,

$R^6$ représente l'hydrogène, un groupe alkyle en $C_1$-$C_4$ portant éventuelement des substituants hydroxy, halogéno, alcoxy en $C_1$-$C_4$, cyano ou acyloxy,

$R^7$ représente l'hydrogène, un halogène, un groupe alkyle en $C_1$-$C_4$, alcoxy en $C_1$-$C_4$, carbalcoxy en $C_1$-$C_4$, alkylsulfonyle en $C_1$-$C_4$, phénylsulfonyle, acétyle ou benzoyle, ou un reste de formule

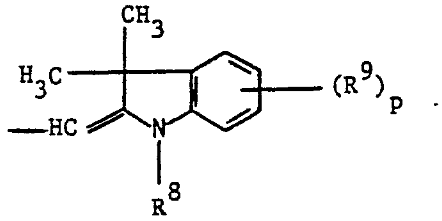

dans laquelle

$R^8$ et $R^9$ ont, indépendamment l'un de l'autre, la même signfiication que R et $R^1$,

X représente un groupe aryle, alkyle en $C_1$-$C_4$ ou alcoxy en $C_1$-$C_4$, et

m, n, o et p représentent, indépendamment les uns des autres, des nombres de 1 à 4, par condensation d'un composé à groupe méthylène de formule

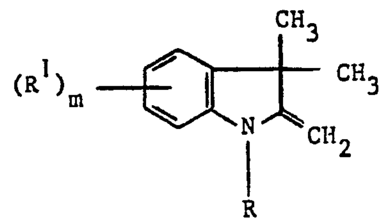

ou d'un sel de formule

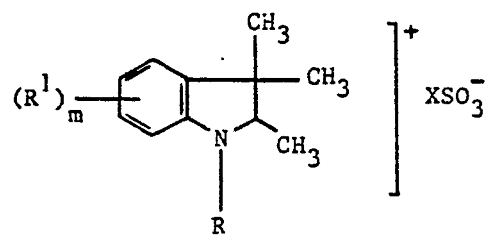

dans lesquelles R, $R^1$ X et m ont les significations indiquées ci-dessus, avec un composé de formule

A—CHO

dans laquelle A a les significations indiquées ci-dessus, et des acides, caractérisé en ce que l'on effectue la condensation du composé à groupe méthylène avec 1 à 7 mol d'un acide de formule

$XSO_3H$

ou du sel avec 0 à 6 mol de l'acide en présence de 0 à 30 % en poids d'un solvant organique et de 0 à 15 % en poids d'eau (les deux indications de % se rapportant au poids total des composants organiques de départ).

2. Procédé selon la revendication 1, pour la préparation de colorants cationiques de méthines de formule générale

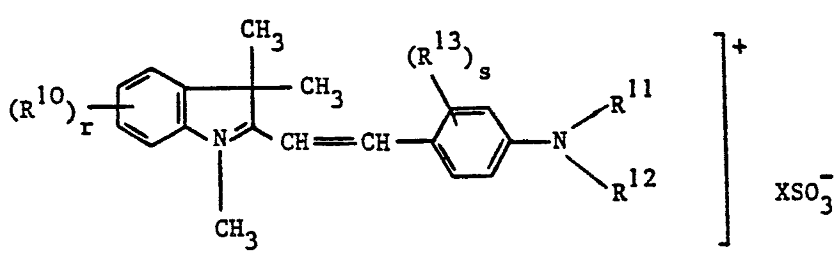

dans laquelle

$R^{10}$ représente l'hydrogène, le chlore, un groupe méthyle, méthoxy, éthoxy ou carbométhoxy,

$R^{11}$ et $R^{12}$ représentent, indépendamment l'un de l'autre, un groupe alkyle en $C_1$-$C_4$ portant éventuellement des substituants hydroxy, méthoxy, éthoxy, chloro, cyano, phényle ou acyloxy, et

$R^{11}$ représente en outre un groupe phényle portant éventuellement des substituants chloro, méthyle, méthoxy ou éthoxy ou peut former avec l'atome de carbone voisin du cycle benzénique un noyau à 5 ou 6 chaînons partiellement hydrogéné contenant de l'azote et éventuellement de l'oxygène,

$R^{13}$ représente l'hydrogène, un groupe méthyle, le chlore, un groupe méthoxy ou éthoxy, et

r et s sont égaux à 0, 1 ou 2, et

X a la signification indiquée dans la revendication 1, par condensation d'un composé de formule

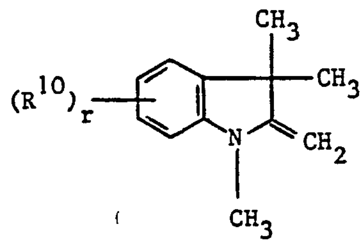

ou d'un composé de formule

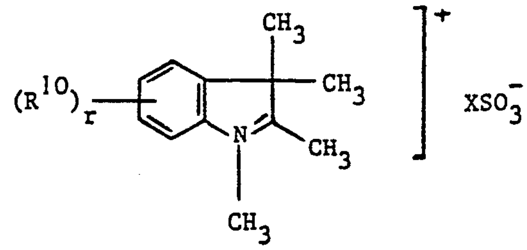

dans lesquelles $R^{10}$, X et r ont les significations indiquées ci-dessus, avec des quantités équimoléculaires d'un composé de formule

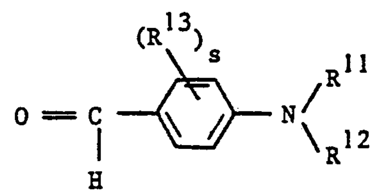

dans laquelle $R^{11}$, $R^{12}$, $R^{13}$ et s ont les significations indiquées ci-dessus, et avec respectivement 1 à 7 mol ou 0 à 6 mol d'un acide de formule

$$XSO_3H$$

3. Procédé selon la revendication 1, caractérisé en ce que l'on met en œuvre des acides de formule $XSO_3H$ dans laquelle X représente un groupe phényle éventuellement substitué par 1 à 3 groupes alkyle en $C_1$-$C_4$, alcoxy en $C_1$-$C_4$, halogènes ou groupes hydroxy, ou le groupe méthyle.

4. Procédé selon la revendication 1, caractérisé en ce que l'on procède à la condensation dans un réacteur à phases solides comportant des éléments en rotation.

5. Procédé selon la revendication 4, caractérisé en ce que l'on effectue la condensation dans des vis de réaction, des appareils de malaxage, des séchoirs à pelles ou des réacteurs pour toutes phases.

6. Procédé selon la revendication 1, caractérisé en ce que, pour préparer des compositions de colorants prêtes à la vente, la réaction étant effectuée dans un séchoir à pelles, on ajoute des diluants ou matières de charge avant, durant ou après la réaction.

7. Procédé selon la revendication 1, caractérisé en ce que, à la masse fondue de colorant préparée sans addition de sels minéraux, on ajoute de l'eau ou un solvant organique miscible à l'eau en quantité suffisante pour obtenir directement une composition liquide stable et concentrée du colorant à une teneur en colorant de 10 à 50 %.

8. Procédé selon la revendication 1, caractérisé en ce que l'on fait réagir des composés de formule générale

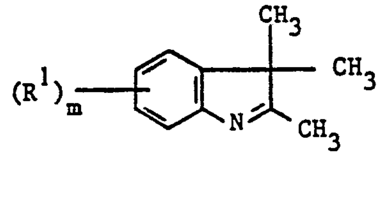

dans laquelle $R^1$ et m ont les significations indiquées dans la revendication 1, avec des composés de formule

$$XSO_3R,$$

dans laquelle X et R ont les significations indiquées dans la revendication 1, formant ainsi des composés de formule générale

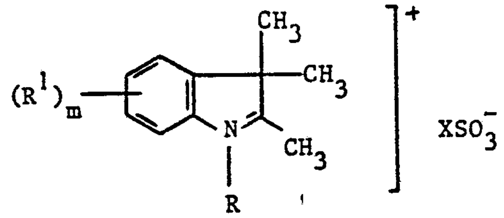

dans laquelle R, $R^1$, m et X ont les significations indiquées dans la revendication 1 qu'on condense, sans les isoler, avec les aldéhydes A-CHO définis dans la revendication 1.

9. Procédé selon la revendication 1, caractérisé en ce que l'on fait réagir des composés de formules

A—CHO,

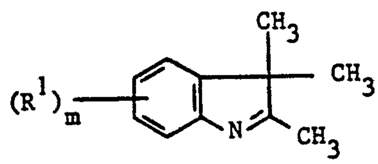

et

$XSO_3R$,

dans lesquelles A, R, $R^1$, m et X ont les significations indiquées dans la revendication 1, par mélange direct dans un appareil de réaction capable de mélanger uniformément des masses fondues de colorants épaisses et qui crisallisent par la suite.

10. Utilisation des sels de colorants préparés selon la revendication 1 pour la teinture du coton tanné, des fibres de polyamides et de polyesters à modification acide, du papier contenant de la pâte de bois, du cuir, et pour la préparation de pâtes pour crayons à billes, encres et encres pour tampons, et en particulier pour la teinture de matières en polyacrylonitrile.